# EUROPÄISCHE PATENTSCHRIFT

(11) **EP 3 551 477 B1**
(45) Veröffentlichungstag und Bekanntmachung des Hinweises auf die Patenterteilung: **27.01.2021**
(21) Anmeldenummer: 17783501.4
(22) Anmeldetag: 12.10.2017
(51) Int. Cl.: B60C 11/12

(54) **FAHRZEUGLUFTREIFEN**
VEHICLE TIRES
PNEUMATIQUE DE VÉHICULE

(30) Priorität: 07.12.2016 DE 102016224370
(43) Veröffentlichungstag der Anmeldung: 16.10.2019
(73) Patentinhaber: Continental Reifen Deutschland GmbH, 30165 Hannover (DE)
(72) Erfinder: KRINGS, Stefan, 31547 Rehburg-Loccum (DE); SENG, Matthias, 30453 Hannover (DE); BRANDAU, Christian, 31542 Bad Nenndorf (DE)
(74) Vertreter: Finger, Karsten
(86) Internationale Anmeldenummer: PCT/EP2017/076042
(87) Internationale Veröffentlichungsnummer: WO 2018/103925

(56) Entgegenhaltungen:
- EP-A1- 0 669 216
- EP-A1- 2 465 708
- EP-A2- 1 529 659
- EP-A2- 1 795 372
- WO-A1-2013/064300
- WO-A1-2016/155855
- DE-A1-102010 005 840
- JP-A- 2003 118 322

## Beschreibung

Die Erfindung betrifft einen Fahrzeugluftreifen mit einem profilierten Laufstreifen, welcher zwei Schulterblockreihen mit durch Querrillen voneinander getrennten Profilblöcken und einen mittleren Laufstreifenbereich aufweist, welcher durch Rillen in Profilblöcke gegliedert ist,
wobei in den Profilblöcken im mittleren Laufstreifenbereich Einschnitte ausgebildet sind, welche sich jeweils parallel zueinander und zur Querrichtung des Laufstreifens unter einem Winkel von bis zu 45° erstrecken und in Draufsicht über mindestens 50% ihrer Erstreckung einen gleichmäßigen wellenförmigen Verlauf aufweisen,
wobei in den Profilblöcken der Schulterblockreihen in Draufsicht gleichmäßig treppenförmig oder wellenförmig verlaufende Einschnitte, welche sich jeweils parallel zueinander und zu den Querrillen zwischen den Profilblöcken erstrecken, ausgebildet sind, wobei
- entweder die in den Profilblöcken mindestens einer Schulterblockreihe in Draufsicht wellenförmig verlaufenden Einschnitte eine Wellenform aufweisen, deren an der Laufstreifenperipherie vorliegende Wellenlänge über den Tiefenverlauf der Wellenform gleich bleibt
- oder die in den Profilblöcken zumindest einer Schulterblockreihe in Draufsicht treppenförmig verlaufenden Einschnitte eine Treppenform aufweisen, die über den Tiefenverlauf der Treppenform gleich bleibt.

Fahrzeugluftreifen mit Laufstreifenprofilen mit einer Vielzahl von Einschnitten in Profilblöcken sind in unterschiedlichen Ausführungsvarianten bekannt. So ist beispielsweise aus der EP 0 669 216 A1 ein PKW-Winterreifen mit einem asymmetrisch gestalteten Laufstreifenprofil bekannt, welches unterschiedlich gestaltete Profilstrukturen in den beiden Laufstreifenhälften aufweist. Der Laufstreifen besitzt schulterseitig jeweils eine Schulterblockreihe, wobei in den Profilblöcken der bei der Innenschulter befindlichen Schulterblockreihe Einschnitte verlaufen, die ein gutes Öffnungsvermögen in Umfangsrichtung aufweisen und insbesondere in Draufsicht treppenförmig verlaufen, und wobei in den Profilblöcken der bei der Außenschulter befindlichen Schulterblockreihe Einschnitte angeordnet sind, die unter Querkraftbeanspruchung eine hohe Blocksteifigkeit gewährleisten und in Draufsicht insbesondere wellenförmig verlaufen. Ein weiterer PKW-Winterreifen mit einem Laufstreifenprofil mit Profilpositiven mit einer Vielzahl von sich zumindest im Wesentlichen im Laufstreifenquerrichtung erstreckenden, in Draufsicht wellenförmig verlaufenden Einschnitten ist aus der EP 0 788 899 A1 bekannt. Reifenschulterseitig weist der Laufstreifen dieses Reifens Schulterblockreihen mit Einschnitten auf, wobei der gegenseitige Normalabstand der Einschnitte in einem Schulterblock größerer Umfangslänge kleiner ist als der gegenseitige Normalabstand der Einschnitte in einem Schulterblock kleinerer Umfangslänge. Dadurch sollen bestimmte Fahreigenschaften, vor allem hinsichtlich des Ansprechens des Reifens um die Nulllage, des Verhaltens bei Spurwechsel und hinsichtlich der Kurvenstabilität, verbessert werden.

Aus der WO 2013/064 300 A1 ist es ferner bekannt, Profilpositive in Laufstreifen von Fahrzeugluftreifen mit jeweils zumindest einem Einschnitt zu versehen, welcher sich in radialer Richtung von der Laufstreifenperipherie ins Profilpositivinnere erstreckt und welcher korrespondierende Einschnittwände in Form einer sinusförmigen Welle aufweist. Zur Verbesserung der Performance des für den Einsatz unter winterlichen Fahrbedingungen vorgesehenen Fahrzeugluftreifens werden die Einschnitte derart ausgeführt, dass sich die Wellenlänge der Einschnitte, ausgehend von der Laufstreifenperipherie Richtung Profilpositivinneres, verändert. Derart ausgeführte Einschnitte beeinflussen einerseits die Steifigkeit der Profilpositive und damit des Laufstreifens, so dass insbesondere eine Verbesserung der Fahreigenschaften auf trockenem Untergrund erreicht wird. Darüber hinaus wird bei abgefahrenem Laufstreifen einem Nachlassen der Seitenführung auf winterlichen Fahrbahnen entgegengewirkt.

Aus der JP 2003 118 322 A ist ein weiterer Fahrzeugluftreifen mit einem Laufstreifen mit mittleren und schulterseitigen Profilblöcken, welche jeweils mit Einschnitten versehen sind, bekannt. Die Einschnitte verlaufen in Draufsicht in axialer Richtung sowie wellenförmig, wobei sich die Wellenlänge der Wellenform ausgehend von der Profilblockoberfläche über den Tiefenverlauf der Wellenform vergrößert und wobei sich die Amplitude der Wellenform ausgehend von der Profilblockoberfläche über den Tiefenverlauf verringert.

Die DE 10 2010 005 840 A1 offenbart einen Fahrzeugluftreifen mit einem Laufstreifen mit Profilblöcken, welche Einschnitte mit an den Einschnittwänden ausgebildeten, bis zur Laufstreifenperipherie reichenden Vertiefungen aufweisen. Die Vertiefungen sind, im Querschnitt parallel zur Laufstreifenperipherie betrachtet, insbesondere halbkreisförmig oder dreieckig ausgeführt und können sich bis zum Einschnittgrund erstrecken.

Ferner aus der WO 2016 155 855 A1 ein Fahrzeugluftreifen mit einem Laufstreifen mit Profilelementen bekannt, in welchen in axialer Richtung verlaufende, in Draufsicht zumindest über einen Abschnitt wellenförmig verlaufende Einschnitte ausgebildet sind. Die Wellenlänge der Wellenform der Einschnitte vergrößert sich ausgehend von der Laufstreifenaußenfläche radial nach innen kontinuierlich, wodurch gute Schneegriffeigenschaften bei fortschreitendem Laufstreifenabrieb erhalten bleiben sollen.

Betrachtet man einen Querschnitt durch einen neuen Fahrzeugluftreifen nimmt die Tiefe der Profilrillen in den Schulterbereichen in Richtung Laufstreifenaußenränder ab. Durch die größere Profil- bzw. Rillentiefe im mittleren Bereich ist der Laufstreifen in diesem Bereich in Umfangsrichtung etwas weicher als in den laufstreifenaußenseitigen Bereichen. Auf diesen Umstand wird üblicherweise bei der Entwicklung von Laufstreifenprofilierungen Rücksicht genommen, um eine entsprechende Verteilung der Umfangssteifigkeit über die Breite des Laufstreifens zu erzielen. Im Laufe der Lebensdauer eines Fahrzeugluftreifens wird der Laufstreifen im Wesentlichen gleichmäßig abgerieben, das heißt die Profiltiefe nimmt an jeder Stelle des Laufstreifens absolut betrachtet in sehr ähnlichem Maß ab. Dies führt dazu, dass das Verhältnis der Profiltiefe in der Laufstreifenmitte zu jenem in den Laufstreifenrandbereichen nicht mehr jenem Verhältnis entspricht, welches am Neureifen vorhanden war. Dies führt zu einer Veränderung der "Verteilung" der Umfangssteifigkeit über die Laufstreifenbreite, im mittleren Bereich ist die Umfangssteifigkeit geringer geworden als in den seitlichen Laufstreifenbereichen. Dieser Effekt bewirkt eine Änderung des Abriebverhaltens zu Ungunsten der äußeren Laufstreifenbereiche.

Der Erfindung liegt die Aufgabe zugrunde, diesem Effekt entgegenzuwirken und eine Änderung der Umfangssteifigkeit während des Laufstreifenabriebs, speziell in der zweiten Hälfte der Lebensdauer eines Fahrzeugluftreifens, zu erzielen, die eine über die Lebensdauer des Reifens weitgehend gleichbleibende Umfangssteifigkeitsverteilung über die Laufstreifenbreite sicherstellt.

Gelöst wird die gestellte Aufgabe erfindungsgemäß dadurch, dass die im mittleren Bereich des Laufstreifens angeordneten Einschnitte eine Wellenform aufweisen, deren Wellenlänge sich ausgehend von der Laufstreifenperipherie in Richtung Profilblockinneres verringert.

Durch die erfindungsgemäße Maßnahme kann über die Laufstreifenbreite und bei zunehmendem Abrieb eine Verteilung der Umfangssteifigkeit erzielt werden, die bei abgeriebenem Laufstreifen wesentlich näher an jener des neuen Reifens liegt bzw. dieser im Wesentlichen sogar entsprechen kann, da die Umfangssteifigkeit der Profilpositive im mittleren Bereich des Laufstreifens relativ zu jener in den Schulterblockreihen mit zunehmendem Abrieb größer wird, wodurch, relativ betrachtet, der größere Steifigkeitszuwachs in den Schulterblockreihen ausgeglichen wird. Durch diese Maßnahme vermindert sich insgesamt auch der Gummiabrieb in den schulterseitigen Bereichen des Laufstreifens und es wird eine insgesamt größere Lebensdauer des Fahrzeugluftreifens erreicht.

Die Änderung der Wellenlänge erfolgt dabei bevorzugt derart, dass eine Gerade, die über den Tiefenverlauf der Wellenform der im mittleren Bereich des Laufstreifens angeordneten Einschnitte an den Einschnittwänden die Endpunkte der wellenförmigen Ausbildung verbindet, einen Winkel mit der radialen Richtung einschließet, welcher 3° bis 15° beträgt.

Eine zusätzliche Maßnahme, die erwünschten Umfangssteifigkeitsverteilung mit zunehmendem Abrieb zu beeinflussen, besteht darin, dass sich auch die Amplitude der Wellenform der im mittleren Bereich des Laufstreifens angeordneten Einschnitte ausgehend von der Laufstreifenperipherie in Richtung Profilblockinneres verringert.

Um das Entstehen von Einrissen am Einschnittgrund zu vermeiden, ist es dabei vorteilhaft, wenn die Amplitude der Wellenform der im mittleren Bereich des Laufstreifens angeordneten Einschnitte bis in einen Abstand von 0,7 mm bis 1,5 mm vom Einschnittgrund auf den Wert Null abnimmt.

Die in den Profilblöcken der Schulterblockreihen ausgebildeten Einschnitte können dazu beitragen, den Steifigkeitszuwachs in den Schulterblockreihen auszugleichen. Dabei kann es vorgesehen sein, dass die Amplitude der in Draufsicht wellenförmig verlaufenden Einschnitte in den Profilblöcken der mindestens einen Schulterblockreihe bis in einen Abstand von 0,7 mm bis 1,5 mm vom Einschnittgrund auf den Wert Null abnimmt.

Bei erfindungsgemäß ausgeführten Reifen ist es ferner günstig, wenn bei neuem Reifen die Wellenlänge der Wellenform der in den Profilblöcken im mittleren Laufstreifenbereich angeordneten Einschnitte, als auch die Wellenlänge der Wellenform der in den Profilblöcken zumindest einer Schulterblockreihe angeordneten Einschnitte an der Laufstreifenperipherie 2,0 mm bis 6,0 mm beträgt und
wenn bei neuem Reifen sowohl die Amplitude der Wellenform der in den Profilblöcken im mittleren Laufstreifenbereich angeordneten Einschnitte, als auch die Amplitude der in den Profilblöcken zumindest einer Schulterblockreihe angeordneten Einschnitte an der Laufstreifenperipherie 0,5 mm bis 1,5 mm beträgt.

Wird ein erfindungsgemäß ausgeführter Fahrzeugluftreifen mit einem asymmetrisch gestalteten Laufstreifen ausgeführt, dessen Profilstrukturen in den beiden Schulterblockreihen sich voneinander unterscheiden, wobei eine der Schulterblockreihen der Außenschulter die andere der Innenschulter zugewandt ist, wobei die Profilblöcke in der der Außenschulter zugewandten Schulterblockreihe mit in Draufsicht treppenförmig verlaufenden Einschnitten versehen sind und wobei die Profilblöcke in der der Innenschulter zugewandten Schulterblockreihe mit in Draufsicht wellenförmig verlaufenden Einschnitten versehen sind.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 eine Draufsicht auf eine Teilabwicklung eines Laufstreifens für einen Fahrzeugluftreifen und
Fig. 2 eine Schnittansicht gemäß der Linie II-II der Fig. 1.

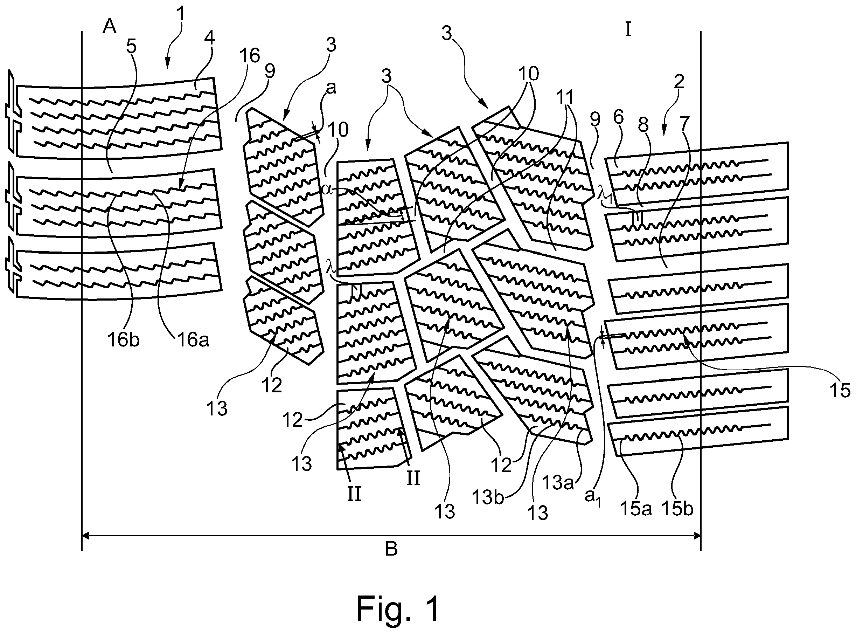

Fig. 1 zeigt eine Draufsicht auf eine Teilabwicklung eines Laufstreifens für einen Fahrzeugluftreifen, insbesondere einen PKW-Winterreifen. Der Laufstreifen wird nachfolgend über seine Breite B im Boden berührenden Teil betrachtet, welche der Breite des statisch ermittelten Footprints gemäß E.T.R.T.O.-Standards (Last bei 70% der Tragfähigkeit bei einem Innendruck von 2,5 bar, Innendruck 85% von 2,9 bar) entspricht. Der dargestellte Laufstreifen ist ein sogenannter asymmetrisch gestalteter Laufstreifen, demnach ein Laufstreifen für einen Fahrzeugluftreifen, der, bezogen auf das Fahrzeug, derart zu montieren ist, dass sich bei montiertem Reifen ein bestimmter Laufstreifenbereich, die in Fig. 1 mit A bezeichnete Außenschulter, an der Außenseite des Fahrzeuges und ein bestimmter Laufstreifenbereich, die in Fig. 1 mit I bezeichnete Innenschulter, an der Innenseite befindet.

Der Laufstreifen gemäß Fig. 1 weist zwei schulterseitige Blockreihen auf, eine bei der Außenschulter A verlaufende Schulterblockreihe 1 und eine bei der Innenschulter I verlaufende Schulterblockreihe 2. Im mittleren Laufstreifenbereich zwischen den beiden Schulterblockreihen 1, 2 verlaufen in Umfangsrichtung vier Blockreihen 3 mit Profilblöcken 12. Die Schulterblockreihe 1 setzt sich in Umfangsrichtung aus Profilblöcken 4 zusammen, die voneinander durch Querrillen 5 getrennt sind. Die Schulterblockreihe 2 besteht aus in Umfangsrichtung aneinandergereihten Profilblöcken 6, die durch Querrillen 7 voneinander getrennt sind. Bei der gezeigten Ausführung sind ferner die Profilblöcke 6 in der Schulterblockreihe 2 etwa mittig mit je einer zusätzlichen Querrille 8 versehen, die schmäler ist als die Querrillen 5 und zu diesen parallel verläuft. Auf diese Weise sind die Profilblöcke 6 doppelblockartig gestaltet. Die Querrillen 5, 7 erstrecken sich bei der gezeigten Ausführung unter einem kleinen spitzen Winkel von bis zu 10° zur exakten Querrichtung.

Die Gliederung des Laufstreifens im mittleren Bereich in vier Blockreihen 3 aus Profilblöcken 12 erfolgt durch Umfangsrillen 9, die an die Schulterblockreihen 1 und 2 anschließen, und weitere in Umfangsrichtung bzw. unter einem spitzen Winkel ≤ 45° zur Umfangsrichtung verlaufende Rillen 10 und durch Querrillen 11, die unter einem Winkel ≤ 45° zur exakten Querrichtung verlaufen. Nachdem die Ausgestaltung und der Verlauf der Rillen 10 sowie der Querrillen 11 für die gegenständliche Erfindung nicht von Belang sind, wird auf diese nicht näher eingegangen.

Die Profilblöcke 12 in den mittleren Blockreihen 3 sind jeweils mit einer Anzahl von in Draufsicht über mindestens 50%, insbesondere mindestens 70, ihrer Erstreckung einen wellenförmig verlaufenden mittleren Abschnitt 13a aufweisenden Einschnitten 13 versehen, welche die Profilblöcke 12 durchqueren. Die Einschnitte 13 erstrecken sich im Wesentlichen in Querrichtung des Laufstreifens, demnach zur Querrichtung unter einem Winkel α ≤ 45, bei der in Fig. 1 gezeigten Ausführung beträgt der Winkel α 10° bis 30°, wobei in sämtlichen zu einer Blockreihe 3 gehörenden Profilblöcken 12 sämtliche Einschnitte 13 parallel zueinander verlaufen. Pro Profilblock 12 sind zumindest drei Einschnitte 13 und insbesondere bis zu sieben Einschnitte 13 vorgesehen. Die Einschnitte 13 weisen jeweils in Draufsicht gerade verlaufende, mit der Erstreckungsrichtung zusammenfallende kurze Endabschnitte 13a auf, die bis zur jeweiligen Profilblockkante reichen und an den wellenförmigen mittleren Abschnitt 13b anschließen.

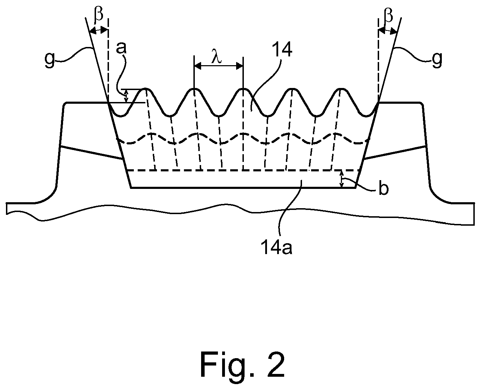

Die Wellenform des mittleren Abschnittes 13b ist im Wesentlichen bzw. angenähert eine gleichmäßige Sinusform, wobei bei der gezeigten Ausführungsform sämtliche Einschnitte 13 auf gleiche Weise wellenförmig ausgeführte mittlere Abschnitte 13b aufweisen. Bei neuem Reifen beträgt die Wellenlänge λ der Wellenform 2,0 mm bis 6,0 mm, die Größe der Amplitude a 0,5 mm bis 1,5 mm. Die Wellenform setzt sich ins Innere des Laufstreifens an den Einschnittwänden der Einschnitte 13 fort, wobei sich jedoch die Wellenlänge λ ausgehend von der Laufstreifenperipherie in Richtung Einschnittgrund kontinuierlich verringert, derart, dass, wie Fig. 2 anhand einer Ansicht auf eine Einschnittwand 14 zeigt, Geraden g, die über den Tiefenverlauf des wellenförmigen Abschnittes 13b des Einschnittes 13 bzw. der Einschnittwand 14 die Endpunkte der wellenförmigen Ausbildung verbinden, einen Winkel β mit der radialen Richtung einschließen, welcher 3° bis 15° beträgt. Bei der in Fig. 2 gezeigten und bevorzugten Ausführung nimmt gleichzeitig mit der Wellenlänge λ auch die Amplitude a kontinuierlich ab, bis sie in einem Abstand b von 0,7 mm bis 1,5 mm vom Einschnittgrund nicht mehr vorhanden ist und Null beträgt. Zum Einschnittgrund weisen die Einschnittwände 14 daher einen rund 0,7 mm bis 1,5 mm hohen Wandabschnitt 14a auf, welcher unstrukturiert und eben ist.

In den Profilblöcken 6 der bei der Innenschulter I befindlichen Schulterblockreihe 2 sind ebenfalls sich parallel zueinander und parallel zu den Querrillen 7 erstreckende, einen in Draufsicht über mindestens 80% ihrer Erstreckung innerhalb der Breite B wellenförmigen Abschnitt 15b aufweisende Einschnitte 15 ausgebildet. Lediglich kurze, etwa 2,0 mm lange Endabschnitte 15a verlaufen in Draufsicht gerade und bis zu den Blockkanten an der Umfangsrille 9. Auch die Wellenform der Abschnitte 15b ist gleichmäßig und im Wesentlichen sinusförmig mit einer konstanter Amplitude a₁ von 1,0 mm bis 1,5 mm und einer konstanter Wellenlänge λ₁ von 2,0 mm bis 6,0 mm an der Laufstreifenperipherie. Vorzugsweise weisen sämtliche Einschnitte 15 die gleiche Wellenlänge λ₁ und die gleiche Amplitude a₁ auf. Im Gegensatz zu den Einschnitten 13 in den Profilblöcken 12 der mittleren Blockreihen 3 behalten die Einschnitte 15 über ihren Tiefenverlauf und entlang der Einschnittwände die gewählte Wellenlänge λ₁ und vorzugsweise auch die gewählte Amplitude a₁. Auch bei den Einschnitten 15 endet die Wellenform in einem Abstand von 0,7 mm bis 1,5 mm vor dem Einschnittgrund, so dass beim Einschnittgrund ein unstrukturierter, 0,7 mm bis 1,5 mm hoher Wandbereich vorhanden ist. Gemäß einer alternativen Ausführung bleibt bei den Einschnitten 15 die Wellenlänge λ₁ über die Erstreckung der Einschnitte 15 ins Innere der Profilblöcke 6 konstant, aber die Amplitude a₁ verringert sich kontinuierlich, insbesondere derart, dass sie beim unstrukturierten inneren Wandabschnitt Null beträgt.

Die Profilblöcke 4 der bei der Außenschulter A befindlichen Schulterblockreihe 1 sind mit Einschnitten 16 versehen, die sich parallel zueinander und zu den Querrillen 5 erstrecken, in Draufsicht betrachtet entlang einer Treppenform verlaufen, daher abwechselnd einen kurzen Abschnitt 16a und einen langen Abschnitt 16b aufweisen. Die Abschnitte 16a, 16b schließen miteinander vorzugsweise rechte Winkel ein. Die Länge der Abschnitte 16a beträgt 1,0 mm bis 3,0 mm, die Länge der Abschnitte 16b 4,0 mm bis 10,0 mm. Sämtliche Einschnitte 16 weisen insbesondere die gleiche Treppenform auf. Entlang der Einschnittwände, ins Innere der Profilblöcke 4, bleibt die an der Laufstreifenperipherie vorliegende Treppenform unverändert. Unmittelbar beim Einschnittgrund befindet sich auch bei den Einschnitten 16 vorzugsweise ein 0,7 mm bis 1,5 mm hoher Wandabschnitt, welcher unstrukturiert ist.

Erfindungsgemäß ausgeführte Laufstreifen können an beiden Schulterbereichen Schulterblockreihen aufweisen, die mit wellenförmig verlaufenden Einschnitten 15 versehen sind. Im mittleren Bereich des Laufstreifens können auch zwei oder drei mittlere Blockreihen vorhanden sein, alternativ kann eine Blockstruktur vorliegen, bei der die Profilblöcke keiner oder nur teilweise einer Blockreihe zugeordnet werden können. Sämtliche Einschnitte 13, 15 und 16 weisen eine Breite von 0,3 mm bis 1,0 mm, insbesondere bis 0,8 mm, auf.

Die Einschnitte 13 im mittleren Bereich des Laufstreifens bewirken eine größere Versteifung des Laufstreifens bei mit zunehmendem Laufstreifenabrieb abnehmender Profiltiefe als die Einschnitte 15 und 16 in den Schulterblockreihen. Mit zunehmendem Abrieb erfolgt daher eine relative Anhebung der Umfangssteifigkeit im mittleren Bereich des Laufstreifens. Dies bewirkt eine Vergleichsmäßigung des Abriebs und insgesamt eine Verminderung des Abriebs des Laufstreifens wodurch sich die Lebensdauer des Reifens erhöht.

### Bezugsziffernliste

- 1,2 ...................: Schulterblockreihe
- 3 ......................: mittlere Blockreihe
- 4, 6, 12 ............: Profilblock
- 5, 7, 11 ............: Querrille
- 8 ......................: schmale Querrille
- 9 ......................: Umfangsrille
- 10 ....................: Rille
- 13, 15, 16.........: Einschnitt
- 13a ..................: Endabschnitt
- 13b ..................: mittlerer Abschnitt
- 14 ....................: Einschnittwand
- 14a ..................: Wandabschnitt
- 15a, 15b...........: Abschnitt
- 16a, 16b...........: Abschnitt
- λ, λ₁ .................: Wellenlänge
- a, a₁ .................: Amplitude
- g ......................: Gerade
- b ......................: Abstand
- a, β ..................: Winkel

## Patentansprüche

1. Fahrzeugluftreifen mit einem profilierten Laufstreifen, welcher zwei Schulterblockreihen (1, 2) mit durch Querrillen (5, 7) voneinander getrennten Profilblöcken (4, 6) und einen mittleren Laufstreifenbereich aufweist, welcher durch Rillen (10, 11) in Profilblöcke (12) gegliedert ist,
wobei in den Profilblöcken (12) im mittleren Laufstreifenbereich Einschnitte (13) ausgebildet sind, welche sich jeweils parallel zueinander und zur Querrichtung des Laufstreifens unter einem Winkel von bis zu 45° erstrecken und in Draufsicht über mindestens 50% ihrer Erstreckung einen gleichmäßigen wellenförmigen Verlauf aufweisen,
wobei in den Profilblöcken (4, 6) der Schulterblockreihen (1, 2) in Draufsicht gleichmäßig treppenförmig oder wellenförmig verlaufende Einschnitte (15, 16), welche sich jeweils parallel zueinander und zu den Querrillen (5, 7) zwischen den Profilblöcken (4, 6) erstrecken, ausgebildet sind,
wobei die in den Profilblöcken (6) mindestens einer Schulterblockreihe (2) in Draufsicht wellenförmig verlaufenden Einschnitte (15) eine Wellenform aufweisen, deren an der Laufstreifenperipherie vorliegende Wellenlänge (λ₁) über den Tiefenverlauf der Wellenform gleich bleibt,
**dadurch gekennzeichnet,**
**dass** die im mittleren Bereich des Laufstreifens angeordneten Einschnitte (13) eine Wellenform aufweisen, deren Wellenlänge (λ) sich ausgehend von der Laufstreifenperipherie in Richtung Profilblockinneres verringert.

2. Fahrzeugluftreifen nach Anspruch 1, **dadurch gekennzeichnet, dass** eine Gerade (g), die über den Tiefenverlauf der Wellenform der im mittleren Bereich des Laufstreifens angeordneten Einschnitte (13) an den Einschnittwänden (14) die Endpunkte der wellenförmigen Ausbildung verbindet, einen Winkel (β) mit der radialen Richtung einschließt, welcher 3° bis 15° beträgt.

3. Fahrzeugluftreifen nach Anspruch 1 oder 2, **dadurch gekennzeichnet, dass** sich auch die Amplitude (a) der Wellenform der im mittleren Bereich des Laufstreifens angeordneten Einschnitte (13) ausgehend von der Laufstreifenperipherie in Richtung Profilblockinneres verringert.

4. Fahrzeugluftreifen nach Anspruch 3, **dadurch gekennzeichnet, dass** die Amplitude (a) der Wellenform der im mittleren Bereich des Laufstreifens angeordneten Einschnitte (13) bis in einen Abstand (b) von 0,7 mm bis 1,5 mm vom Einschnittgrund auf den Wert Null abnimmt.

5. Fahrzeugluftreifen nach einem der Ansprüche 1 bis 4, **dadurch gekennzeichnet, dass** sich die Amplitude (a₁) der in Draufsicht wellenförmig verlaufenden Einschnitte (15) in den Profilblöcken (6) der mindestens einen Schulterblockreihe (2) über den Tiefenverlauf der Wellenform verringert.

6. Fahrzeugluftreifen nach Anspruch 5, **dadurch gekennzeichnet, dass** die Amplitude (a₁) der in Draufsicht wellenförmig verlaufenden Einschnitte (15) in den Profilblöcken (6) der mindestens einen Schulterblockreihe (2) bis in einen Abstand (b) von 0,7 mm bis 1,5 mm vom Einschnittgrund auf den Wert Null abnimmt.

7. Fahrzeugluftreifen nach einem der Ansprüche 1 bis 6, **dadurch gekennzeichnet, dass** bei neuem Reifen die Wellenlänge (λ) der Wellenform der in den Profilblöcken (12) im mittleren Laufstreifenbereich angeordneten Einschnitte (13), als auch die Wellenlänge (λ₁) der Wellenform der in den Profilblöcken (6) zumindest einer Schulterblockreihe (2) angeordneten Einschnitte (15) an der Laufstreifenperipherie 2,0 mm bis 6,0 mm beträgt.

8. Fahrzeugluftreifen nach einem der Ansprüche 1 bis 7, **dadurch gekennzeichnet, dass** bei neuem Reifen sowohl die Amplitude (a) der Wellenform der in den Profilblöcken (12) im mittleren Laufstreifenbereich angeordneten Einschnitte (13), als auch die Amplitude (a₁) der in den Profilblöcken (6) zumindest einer Schulterblockreihe (2) angeordneten Einschnitte (15) an der Laufstreifenperipherie 0,5 mm bis 1,5 mm beträgt.

9. Fahrzeugluftreifen nach einem der Ansprüche 1 bis 8, wobei der Fahrzeugluftreifen einen asymmetrisch gestalteten Laufstreifen aufweist, dessen Profil strukturen in den beiden Schulterblockreihen (1, 2) sich voneinander unterscheiden, wobei eine der Schulterblockreihen (1, 2) der Außenschulter (A) die andere der Innenschulter (I) zugewandt ist, wobei die Profilblöcke (6) in der der Innenschulter (I) zugewandten Schulterblockreihe (2) mit in Draufsicht wellenförmig verlaufenden Einschnitten (15) versehen sind.

10. Fahrzeugluftreifen mit einem profilierten Laufstreifen, welcher zwei Schulterblockreihen (1, 2) mit durch Querrillen (5, 7) voneinander getrennten Profilblöcken (4, 6) und einen mittleren Laufstreifenbereich aufweist, welcher durch Rillen (10, 11) in Profilblöcke (12) gegliedert ist,
wobei in den Profilblöcken (12) im mittleren Laufstreifenbereich Einschnitte (13) ausgebildet sind, welche sich jeweils parallel zueinander und zur Querrichtung des Laufstreifens unter einem Winkel von bis zu 45° erstrecken und in Draufsicht über mindestens 50% ihrer Erstreckung einen gleichmäßigen wellenförmigen Verlauf aufweisen,
wobei in den Profilblöcken (4, 6) der Schulterblockreihen (1, 2) in Draufsicht gleichmäßig treppenförmig oder wellenförmig verlaufende Einschnitte (15, 16), welche sich jeweils parallel zueinander und zu den Querrillen (5, 7) zwischen den Profilblöcken (4, 6) erstrecken, ausgebildet sind,
wobei die in den Profilblöcken (4) zumindest einer Schulterblockreihe (1) in Draufsicht treppenförmig verlaufenden Einschnitte (16) eine Treppenform aufweisen, die über den Tiefenverlauf der Treppenform gleich bleibt,
**dadurch gekennzeichnet,**
**dass** die im mittleren Bereich des Laufstreifens angeordneten Einschnitte (13) eine Wellenform aufweisen, deren Wellenlänge (λ) sich ausgehend von der Laufstreifenperipherie in Richtung Profilblockinneres verringert.

11. Fahrzeugluftreifen nach Anspruch 10, **dadurch gekennzeichnet, dass** eine Gerade (g), die über den Tiefenverlauf der Wellenform der im mittleren Bereich des Laufstreifens angeordneten Einschnitte (13) an den Einschnittwänden (14) die Endpunkte der wellenförmigen Ausbildung verbindet, einen Winkel (β) mit der radialen Richtung einschließt, welcher 3° bis 15° beträgt.

12. Fahrzeugluftreifen nach Anspruch 10 oder 11, **dadurch gekennzeichnet, dass** sich auch die Amplitude (a) der Wellenform der im mittleren Bereich des Laufstreifens angeordneten Einschnitte (13) ausgehend von der Laufstreifenperipherie in Richtung Profilblockinneres verringert.

13. Fahrzeugluftreifen nach Anspruch 12, **dadurch gekennzeichnet, dass** die Amplitude (a) der Wellenform der im mittleren Bereich des Laufstreifens angeordneten Einschnitte (13) bis in einen Abstand (b) von 0,7 mm bis 1,5 mm vom Einschnittgrund auf den Wert Null abnimmt.

14. Fahrzeugluftreifen nach einem der Ansprüche 10 bis 13, wobei der Fahrzugluftreifen einen asymmetrisch gestalteten Laufstreifen aufweist, dessen Profilstrukturen in den beiden Schulterblockreihen (1, 2) sich voneinander unterscheiden, wobei eine der Schulterblockreihen (1, 2) der Außenschulter (A) die andere der Innenschulter (I) zugewandt ist, wobei die Profilblöcke (4) in der der Außenschulter (A) zugewandten Schulterblockreihe (1) mit in Draufsicht treppenförmig verlaufenden Einschnitten (16) versehen sind.

15. Fahrzeugluftreifen nach einem der Ansprüche 1 bis 8 oder einem der Ansprüche 10 bis 13, wobei der Fahrzeugluftreifen einen asymmetrisch gestalteten Laufstreifen aufweist, dessen Profilstrukturen in den beiden Schulterblockreihen (1, 2) sich voneinander unterscheiden, wobei eine der Schulterblockreihen (1, 2) der Außenschulter (A) die andere der Innenschulter (I) zugewandt ist, wobei die Profilblöcke (4) in der der Außenschulter (A) zugewandten Schulterblockreihe (1) mit in Draufsicht treppenförmig verlaufenden Einschnitten (16) versehen sind und wobei die Profilblöcke (6) in der der Innenschulter (I) zugewandten Schulterblockreihe (2) mit in Draufsicht wellenförmig verlaufenden Einschnitten (15) versehen sind.

## Claims

1. Pneumatic vehicle tyre comprising a profiled tread which has two rows of shoulder blocks (1, 2), with profile blocks (4, 6) separated from one another by transverse grooves (5, 7), and a central tread region, which is divided into profile blocks (12) by grooves (10, 11),
wherein sipes (13), which respectively extend parallel to one another at an angle to the transverse direction of the tread of up to 45° and have a uniform wave-shaped course in plan view over at least 50% of their extent, are formed in the profile blocks (12) in the central tread region,
wherein sipes (15, 16), which run in a uniformly step-shaped or wave-shaped manner in plan view and respectively extend between the profile blocks (4, 6) parallel to one another and to the transverse grooves (5, 7), are formed in the profile blocks (4, 6) of the rows of shoulder blocks (1, 2),
wherein the sipes (15) running in a wave-shaped manner in plan view in the profile blocks (6) of at least one row of shoulder blocks (2) have a wave shape of which the wavelength (λ₁) at the periphery of the tread remains the same over the course of the depth of the wave shape,
**characterized**
**in that** the sipes (13) arranged in the central region of the tread have a wave shape of which the wavelength
(λ) decreases from the periphery of the tread in the direction of the interior of the profile block.

2. Pneumatic vehicle tyre according to Claim 1, **characterized in that** a straight line (g), which connects the end points of the wave-shaped formation over the course of the depth of the wave shape of the sipes (13) arranged in the central region of the tread at the sipe walls (14), forms an angle (β) with the radial direction that is 3° to 15°.

3. Pneumatic vehicle tyre according to Claim 1 or 2, **characterized in that** the amplitude (a) of the wave shape of the sipes (13) arranged in the central region of the tread also decreases from the periphery of the tread in the direction of the interior of the block profile.

4. Pneumatic vehicle tyre according to Claim 3, **characterized in that** the amplitude (a) of the wave shape of the sipes (13) arranged in the central region of the tread decreases to the value zero by the point where it is within a distance (b) of 0.7 mm to 1.5 mm from the base of the sipe.

5. Pneumatic vehicle tyre according to one of Claims 1 to 4, **characterized in that** the amplitude (a₁) of the sipes (15) running in a wave-shaped manner in plan view in the profile blocks (6) of the at least one row of shoulder blocks (2) decreases over the course of the depth of the wave shape.

6. Pneumatic vehicle tyre according to Claim 5, **characterized in that** the amplitude (a₁) of the sipes (15) running in a wave-shaped manner in plan view in the profile blocks (6) of the at least one row of shoulder blocks (2) decreases to the value zero by the point where it is within a distance (b) of 0.7 mm to 1.5 mm from the base of the sipe.

7. Pneumatic vehicle tyre according to one of Claims 1 to 6, **characterized in that**, on a new tyre, the wavelength (λ) of the wave shape of the sipes (13) arranged in the profile blocks (12) in the central tread region and the wavelength (λ₁) of the wave shape of the sipes (15) arranged in the profile blocks (6) of at least one row of shoulder blocks (2) at the periphery of the tread is 2.0 mm to 6.0 mm.

8. Pneumatic vehicle tyre according to one of Claims 1 to 7, **characterized in that**, on a new tyre, both the amplitude (a) of the wave shape of the sipes (13) arranged in the profile blocks (12) in the central tread region and the amplitude (a₁) of the sipes (15) arranged in the profile blocks (6) of at least one row of shoulder blocks (2) at the periphery of the tread is 0.5 mm to 1.5 mm.

9. Pneumatic vehicle tyre according to one of Claims 1 to 8, wherein the pneumatic vehicle tyre has an asymmetrically designed tread, the profile structures of which in the two rows of shoulder blocks (1, 2) differ from one another, wherein one of the rows of shoulder blocks (1, 2) is facing the outer shoulder (A), the other is facing the inner shoulder (I), wherein the profile blocks (6) in the row of shoulder blocks (2) facing the inner shoulder (I) are provided with sipes (15) running in a wave-shaped manner in plan view.

10. Pneumatic vehicle tyre comprising a profiled tread which has two rows of shoulder blocks (1, 2), with profile blocks (4, 6) separated from one another by transverse grooves (5, 7), and a central tread region, which is divided into profile blocks (12) by grooves (10, 11),
wherein sipes (13), which respectively extend parallel to one another at an angle to the transverse direction of the tread of up to 45° and have a uniform wave-shaped course in plan view over at least 50% of their extent, are formed in the profile blocks (12) in the central tread region,
wherein sipes (15, 16), which run in a uniformly step-shaped or wave-shaped manner in plan view and respectively extend between the profile blocks (4, 6) parallel to one another and to the transverse grooves (5, 7), are formed in the profile blocks (4, 6) of the rows of shoulder blocks (1, 2),
wherein the sipes (16) running in a step-shaped manner in plan view in the profile blocks (4) of at least one row of shoulder blocks (1) have a step shape which remains the same over the course of the depth of the step shape,
**characterized**
**in that** the sipes (13) arranged in the central region of the tread have a wave shape of which the wavelength (λ) decreases from the periphery of the tread in the direction of the interior of the profile block.

11. Pneumatic vehicle tyre according to Claim 10, **characterized in that** a straight line (g), which connects the end points of the wave-shaped formation over the course of the depth of the wave shape of the sipes (13) arranged in the central region of the tread at the sipe walls (14), forms an angle (β) with the radial direction that is 3° to 15°.

12. Pneumatic vehicle tyre according to Claim 10 or 11, **characterized in that** the amplitude (a) of the wave shape of the sipes (13) arranged in the central region of the tread also decreases from the periphery of the tread in the direction of the interior of the block profile.

13. Pneumatic vehicle tyre according to Claim 12, **characterized in that** the amplitude (a) of the wave shape of the sipes (13) arranged in the central region of the tread decreases to the value zero by the point where it is within a distance (b) of 0.7 mm to 1.5 mm from the base of the sipe.

14. Pneumatic vehicle tyre according to one of Claims 10 to 13, wherein the pneumatic vehicle tyre has an asymmetrically designed tread, the profile structures of which in the two rows of shoulder blocks (1, 2) differ from one another, wherein one of the rows of shoulder blocks (1, 2) is facing the outer shoulder (A), the other is facing the inner shoulder (I), wherein the profile blocks (4) in the row of shoulder blocks (1) facing the outer shoulder (A) are provided with sipes (16) running in a step-shaped manner in plan view.

15. Pneumatic vehicle tyre according to one of Claims 1 to 8 or one of Claims 10 to 13, wherein the pneumatic vehicle tyre has an asymmetrically designed tread, the profile structures of which in the two rows of shoulder blocks (1, 2) differ from one another, wherein one of the rows of shoulder blocks (1, 2) is facing the outer shoulder (A), the other is facing the inner shoulder (I), wherein the profile blocks (4) in the row of shoulder blocks (1) facing the outer shoulder (A) are provided with sipes (16) running in a step-shaped manner in plan view and wherein the profile blocks (6) in the row of shoulder blocks (2) facing the inner shoulder (I) are provided with sipes (15) running in a wave-shaped manner in plan view.

## Revendications

1. Pneumatique de véhicule comportant une bande de roulement profilée, laquelle comprend deux rangées de blocs d'épaulement (1, 2) comportant des blocs profilés (4, 6) séparés les uns des autres par des rainures transversales (5, 7) et une région centrale de bande de roulement, laquelle est divisée en blocs profilés (12) par des rainures (10, 11),
dans lequel des entailles (13) sont formées dans la région centrale de bande de roulement dans les blocs profilés (12), lesquelles entailles s'étendent respectivement parallèlement les unes aux autres et à la direction transversale de la bande de roulement suivant un angle de jusqu'à 45° et présentent une allure ondulée uniforme en vue de dessus sur au moins 50% de leur étendue, dans lequel des entailles (15, 16) s'étendant uniformément en forme de gradins ou de manière ondulée en vue de dessus sont formées dans les blocs profilés (4, 6) des rangées de blocs d'épaulement (1, 2), lesquelles entailles s'étendent respectivement parallèlement les unes aux autres et aux rainures transversales (5, 7) entre les blocs profilés (4, 6) et,
dans lequel les entailles (15) s'étendant de manière ondulée en vue de dessus dans les blocs profilés (6) d'au moins une rangée de blocs d'épaulement (2) présentent une forme d'onde dont la longueur d'onde (λ) présente à la périphérie de la bande de roulement demeure identique sur l'allure en profondeur de la forme d'onde,
**caractérisé en ce que**
les entailles (13) disposées dans la région centrale de la bande de roulement présentent une forme d'onde dont la longueur d'onde (À) diminue à partir de la périphérie de la bande de roulement en direction de l'intérieur des blocs profilés.

2. Pneumatique de véhicule selon la revendication 1, **caractérisé en ce qu'**une droite (g) qui relie les points d'extrémité de la configuration ondulée sur l'allure en profondeur de la forme d'onde des entailles (13) disposées dans la région centrale de la bande de roulement au niveau des parois d'entaille (14) forme un angle (β) avec la direction radiale, lequel vaut de 3° à 15°.

3. Pneumatique de véhicule selon la revendication 1 ou 2, **caractérisé en ce que** l'amplitude (a) de la forme d'onde des entailles (13) disposées dans la région centrale de la bande de roulement diminue également à partir de la périphérie de la bande de roulement en direction de l'intérieur des blocs profilés.

4. Pneumatique de véhicule selon la revendication 3, **caractérisé en ce que** l'amplitude (a) de la forme d'onde des entailles (13) disposées dans la région centrale de la bande de roulement décroît jusqu'à la valeur zéro jusqu'à une distance (b) de 0,7 mm à 1,5 mm par rapport au fond d'entaille.

5. Pneumatique de véhicule selon l'une des revendications 1 à 4, **caractérisé en ce que** l'amplitude (a₁) des entailles (15) s'étendant de manière ondulée en vue de dessus dans les blocs profilés (6) de l'au moins une rangée de blocs d'épaulement (2) diminue sur l'allure en profondeur de la forme d'onde.

6. Pneumatique de véhicule selon la revendication 5, **caractérisé en ce que** l'amplitude (a₁) des entailles (15) s'étendant de manière ondulée en vue de dessus dans les blocs profilés (6) de l'au moins une rangée de blocs d'épaulement (2) décroît jusqu'à la valeur zéro jusqu'à une distance (b) de 0,7 mm à 1,5 mm par rapport au fond d'entaille.

7. Pneumatique de véhicule selon l'une des revendications 1 à 6, **caractérisé en ce que**, dans le cas de pneumatiques neufs, la longueur d'onde (λ) de la forme d'onde des entailles (13) disposées dans les blocs profilés (12) dans la région centrale de bande de roulement, tout comme la longueur d'onde (λ₁) de la forme d'onde des entailles (15) disposées dans les blocs profilés (6) d'au moins une rangée de blocs d'épaulement (2) vaut de 2,0 mm à 6,0 mm à la périphérie de la bande de roulement.

8. Pneumatique de véhicule selon l'une des revendications 1 bis 7, **caractérisé en ce que**, dans le cas de pneumatiques neufs, à la fois l'amplitude (a) de la forme d'onde des entailles (13) disposées dans les blocs profilés (12) dans la région centrale de bande de roulement et l'amplitude (a₁) des entailles (15) disposées dans les blocs profilés (6) d'au moins une rangée de blocs d'épaulement (2) valent de 0,5 mm à 1,5 mm à la périphérie de la bande de roulement.

9. Pneumatique de véhicule selon l'une des revendications 1 à 8, le pneumatique de véhicule comprenant une bande de roulement de configuration asymétrique, bande de roulement dont les structures profilées dans les deux rangées de blocs d'épaulement (1, 2) sont différentes les unes des autres, l'une des rangées de blocs d'épaulement (1, 2) de l'épaulement extérieur (A) étant tournée vers l'autre de l'épaulement intérieur (I), les blocs profilés (6) dans la rangée de blocs d'épaulement (2) tournée vers l'épaulement intérieur (I) étant dotés d'entailles (15) s'étendant de manière ondulée en vue de dessus.

10. Pneumatique de véhicule comportant une bande de roulement profilée, laquelle comprend deux rangées de blocs d'épaulement (1, 2) comportant des blocs profilés (4, 6) séparés les uns des autres par des rainures transversales (5, 7) et une région centrale de bande de roulement, laquelle est divisée en blocs profilés (12) par des rainures (10, 11),
dans lequel des entailles (13) sont formées dans la région centrale de bande de roulement dans les blocs profilés (12), lesquelles entailles s'étendent respectivement parallèlement les unes aux autres et à la direction transversale de la bande de roulement suivant un angle de jusqu'à 45° et présentent une allure ondulée uniforme en vue de dessus sur au moins 50% de leur étendue, dans lequel des entailles (15, 16) s'étendant uniformément en forme de gradins ou de manière ondulée en vue de dessus sont formées dans les blocs profilés (4, 6) des rangées de blocs d'épaulement (1, 2), lesquelles entailles s'étendent respectivement parallèlement les unes aux autres et aux rainures transversales (5, 7) entre les blocs profilés (4, 6) et,
dans lequel les entailles (16) s'étendant en forme de gradins en vue de dessus dans les blocs profilés (4) d'au moins une rangée de blocs d'épaulement (1) présentent une forme de gradin qui demeure identique sur l'allure en profondeur de la forme de gradin,
**caractérisé en ce que**
les entailles (13) disposées dans la région centrale de la bande de roulement présentent une forme d'onde dont la longueur d'onde (λ) diminue à partir de la périphérie de la bande de roulement en direction de l'intérieur des blocs profilés.

11. Pneumatique de véhicule selon la revendication 10, **caractérisé en ce qu'**une droite (g) qui relie les points d'extrémité de la configuration ondulée sur l'allure en profondeur de la forme d'onde des entailles (13) disposées dans la région centrale de la bande de roulement au niveau des parois d'entaille (14) forme un angle (β) avec la direction radiale, lequel vaut de 3° à 15°.

12. Pneumatique de véhicule selon la revendication 10 ou 11, **caractérisé en ce que** l'amplitude (a) de la forme d'onde des entailles (13) disposées dans la région centrale de la bande de roulement diminue également à partir de la périphérie de la bande de roulement en direction de l'intérieur des blocs profilés.

13. Pneumatique de véhicule selon la revendication 12, **caractérisé en ce que** l'amplitude (a) de la forme d'onde des entailles (13) disposées dans la région centrale de la bande de roulement décroît jusqu'à la valeur zéro jusqu'à une distance (b) de 0,7 mm à 1,5 mm par rapport au fond d'entaille.

14. Pneumatique de véhicule selon l'une des revendications 10 à 13, le pneumatique de véhicule comprenant une bande de roulement de configuration asymétrique, bande de roulement dont les structures profilées dans les deux rangées de blocs d'épaulement (1, 2) sont différentes les unes des autres, l'une des rangées de blocs d'épaulement (1, 2) de l'épaulement extérieur (A) étant tournée vers l'autre de l'épaulement intérieur (I), les blocs profilés (4) dans la rangée de blocs d'épaulement (1) tournée vers l'épaulement extérieur (A) étant dotés d'entailles (16) s'étendant en forme de gradins en vue de dessus.

15. Pneumatique de véhicule selon l'une des revendications 1 à 8 ou l'une des revendications 10 à 13, le pneumatique de véhicule comprenant une bande de roulement de configuration asymétrique, bande de roulement dont les structures profilées dans les deux rangées de blocs d'épaulement (1, 2) sont différentes les unes des autres, l'une des rangées de blocs d'épaulement (1, 2) de l'épaulement extérieur (A) étant tournée vers l'autre de l'épaulement intérieur (I), les blocs profilés (4) dans la rangée de blocs d'épaulement (1) tournée vers l'épaulement extérieur (A) étant dotés d'entailles (16) s'étendant en forme de gradins en vue de dessus, et les blocs profilés (6) dans la rangée de blocs d'épaulement (2) tournée vers l'épaulement intérieur (I) étant dotés d'entailles (15) s'étendant de manière ondulée en vue de dessus.
